**Europäisches Patentamt**

**European Patent Office**

**Office européen des brevets**

(19)

(11) Veröffentlichungsnummer : **0 356 445 B1**

(12) # EUROPÄISCHE PATENTSCHRIFT

(45) Veröffentlichungstag der Patentschrift :
29.07.92 Patentblatt 92/31

(51) Int. Cl.$^5$ : **G01M 13/02**

(21) Anmeldenummer : **88903246.2**

(22) Anmeldetag : **15.04.88**

(86) Internationale Anmeldenummer :
**PCT/EP88/00319**

(87) Internationale Veröffentlichungsnummer :
**WO 88/08124 20.10.88 Gazette 88/23**

(54) **PRÜFMASCHINE FÜR DIE LEBENSDAUERUNTERSUCHUNG, FUNKTIONSPRÜFUNG UND KENNLINIENERMITTLUNG VON TORSIONSSCHWINGUNGSDÄMPFERN UND ZWEIMASSENSCHWUNGRÄDERN.**

(30) Priorität : **18.04.87 DE 3713243**

(43) Veröffentlichungstag der Anmeldung :
**07.03.90 Patentblatt 90/10**

(45) Bekanntmachung des Hinweises auf die Patenterteilung :
**29.07.92 Patentblatt 92/31**

(84) Benannte Vertragsstaaten :
**DE FR GB IT SE**

(56) Entgegenhaltungen :
**DE-A- 2 740 197**
**FR-A- 2 483 616**

(56) Entgegenhaltungen :
**Ingénieurs de l'Automobile, No. 4, April 1977, (Boulogne, FR), M.J.L. Montanat: "Banc d'essai hydropuls pour éléments detransmission", pages 228-232**
**Patent Abstracts of Japan vol. 11, no. 243 (P-603) (2690), 8 August 1987, & JP-A-6252427**

(73) Patentinhaber :
**INDUSTRIEANLAGEN-BETRIEBSGESELLSCHAFT M.B.H.**
**Abt. ZPR Einsteinstrasse 20 Postabholfach**
**W-8012 Ottobrunn (DE)**

(72) Erfinder : **Hück, Manfred**
**Asternweg 25**
**W-8011 Vaterstetten (DE)**

(74) Vertreter : **Bohnenberger, Johannes, Dr. et al**
**Meissner, Bolte & Partner Widenmayerstrasse 48 Postfach 86 06 24**
**W-8000 München 86 (DE)**

EP 0 356 445 B1

## Beschreibung

Die Erfindung betrifft eine Prüfmaschine nach dem Oberbegriff des Patentanspruches 1.

Torsionsschwingungsdämpfer und Zweimassenschwungräder sind drehelastische Teile, die ein Primär- und ein Sekundärteil aufweisen, die miteinander über elastische Elemente und Dämpfungselemente drehelastisch gekoppelt sind. So z.B. werden Zweimassenschwungräder am Abtrieb von Kolbenmotoren zur Reduktion des Ungleichförmigkeitsgrades der Drehbewegung und zur akustischen Entkopplung von Motor und Fahrgastzelle eingesetzt. Bei derartigen Zweimassenschwungsrädern erfahren die Feder-, Dämpfungs-, Lager- und Dichtungselemente eine aus mehreren Komponenten zusammengesetzte Beanspruchung durch

- die Zentrifugalkräfte,
- die Erwärmung in der Nähe des Motorraums,
- die zu überlagernden Drehmomente,
- die überlagerten Drehschwingungen und
- die Taumelbewegungen, verursacht durch eine Verformung der Kurbelwelle.

Aus der Zeitschrift "Ingenieurs de l'Automobile, Nr. 4, April 1977, (Boulogne, FR), Seiten 228-232 sind Prüfmaschinen zum Prüfer- von Kupplungen und drehelastischen Teilen bekannt. Diese Prüfmaschine umfaßt eine Trommel, die an zwei Stellen an einem Maschinenbett gelagert ist. Über die Lagerstellen hinausragend ist an die Trommel eine Riemenscheibe angeflanscht, die über einen Treibriemen mit einem Elektromotor drehfest verbunden ist. Auf die Riemenscheibe aufgesetzt ist ein in einem Gehäuse angeordneter Hydromotor vorgesehen, dessen Ausgangswelle durch die Riemenscheibe und die Trommel hindurchragt und in einem Gelenkrohr endet, das an der Trommel auf der anderen Seite der Lagerung angeflanscht ist. Das Gelenkrohr umfaßt einen faltenbalgartigen Gelenkabschnitt, der das Gelenkrohr in zwei gegeneinander verbiegbare Teile teilt. Im Gelenkrohr wird der Prüfkörper angeordnet, der mit seinem einen Ende an dem in das Gelenkrohr ragenden Wellenende befestigt ist und mit seinem anderen Ende an einer Endplatte des Gelenkrohrs sitzt. An diesem Ende des Gelenkrohrs ist ein Hydropuls-Längszylinder über ein Lager angekoppelt, der das Gelenkrohr mit einer Kraft senkrecht zur Drehachse beaufschlagen kann.

Bei dieser Anordnung wird es als nachteilig angesehen, daß die erzielbaren Drehzahlen relativ niedrig sind. Dies liegt zum einen daran, daß die Gesamtanordnung sehr langbauend ist, so daß bereits geringste Unwuchten bei höheren Drehzahlen zu einer Verbiegung der Anordnung führen. Zum anderen hat es sich überraschenderweise gezeigt, daß das balgartige Gelenkelement im Gelenkrohr bei Auslenkung durch den Hydropulszylinder eine Reihe von Nachteilen bezüglich der Erzeugung von Unwuchten mit sich bringt. Bei Aufbringung einer Querkraft ändert sich nämlich der Durchmesser des Gelenkrohres ungleichmäßig, was zu Unwuchten führt. Wenn nämlich der Hydropulszylinder nach der einen Seite zieht, so vergrößert sich der Radius an dieser Seite und vermindert sich an der anderen Seite.

Bei der bekannten Anordnung kann das Gelenkrohr keine Querkraft aufnehmen, so daß der Drehpunkt beim Abbiegen durch Aufbringung einer Querkraft nicht festliegt. Dies spielt zwar bei der bekannten Anordnung keine Rolle, weil der dort zu untersuchende Prüfling in Längsrichtung steif ist und somit den Drehpunkt (mit) festlegt, jedoch ist dies vorgroßem Nachteil dann, wenn Torsionsschwingungsdämpfer und ähnliche, ein Primär- und ein Sekundärteil aufweisende Prüflinge, insbesondere Zweimassenschwungräder geprüft werden sollen, die in Längsrichtung nicht als steif betrachtet werden können.

Ein weiterer Nachteil der bekannten Anordnung liegt darin, daß die Gelenkrohrkonstruktion eine relativ geringe Torsionssteifigkeit aufweist, so daß die aufbringbaren Kräfte niedrig sind.

Der Erfindung liegt die Aufgabe zugrunde, eine Prüfmaschine für Torsionsschwingungsdämpfer und ähnliche, ein Primär- und ein Sekundärteil aufweisende Prüflinge aufzuzeigen, mittels derer die Prüflinge unter wirklichkeitsnahen Bedingungen, insbesondere hinsichtlich Drehzahl und aufzubringendem Drehmoment prüfbar sind.

Diese Aufgabe wird durch eine Prüfmaschine mit den im Patentanspruch 1 aufgeführten Merkmalen gelöst.

Die Verwendung einer torsionssteifen, biegeelastischen Membran als drehstarre Ausgleichskupplung ist zwar an sich aus dem deutschen Buch "Taschenbuch für den Maschinenbau/Dubbel", 14. Auflage, Springer-Verlag 1981, Seite 409, bekannt, jedoch sind die besonderen Vorteile dieser Kupplung gegenüber der bekannten Faltenbalg-Kupplung nicht vorhersehbar gewesen. Dies gilt insbesondere für das Unwuchtproblem.

Bei einer bevorzugten Ausführungsform der Erfindung ragt die Welle des Hydromotors direkt in den topfförmigen Prüfkopf, so daß der Prüfling mit seinem Primärteil direkt an der Welle ankoppelbar und im Innenraum des Prüfkopfs aufnehmbar ist. Dadurch wird eine besonders kurze und damit schwingungsarme Bauform erzielt.

Vorzugsweise ist eine Biegeeinrichtung vorgesehen, die an das Sekundärteil des Prüflings koppelbar und derart ausgebildet ist, daß eine zur Drehachse des Prüflings senkrecht wirkende Kraft aufbringbar ist. Die Biegeeinrichtung umfaßt einen am Sekundärteil des Prüflings befestigten Hebel, der über ein Lager mit einem Hydraulikzylinder verbunden ist, der zur Aufbringung der Kraft ansteuerbar ist.

Vorzugsweise ist eine die Kraftübertragungseinrichtung und damit den Prüfling umschließende Heizkammer vorgesehen, deren Innenraum aufheizbar ist. Eine solche Heizkammer ist zur Prüfung von Zahnrädern an sich aus der JP-A-6252427 (Patent Abstracts of Japan, Band 11, Nr. 243 (P-603) (2690), 8. August 1987) bekannt.

Im folgenden wird die Erfindung anhand der beiliegenden Abbildung näher erläutert.

Ein geeigneter Antrieb 1 (z. B. Elektromotor oder Hydromotor mit Übersetzung ins Schnelle, wie in DE 35 01 342 beschrieben) treibt einen rotationssymmetrischen Hydrozylinder 2, der in Lagern 3 gelagert ist. Der Prüfkopf 4 ist fest mit dem umlaufenden Gehäuse des Hydrozylinders verbunden. Der Prüfkopf wird an seiner freien Seite nach Einbau des Prüflings (Torsionsschwingungsdämpfer oder Zweimassenschwungrad) durch eine torsionssteife, biegeelastische Membran 5 und einen Spannring 6 abgeschlossen. Der Prüfling besteht dabei aus einer zur Lastaufnahme dienenden Primärmasse 7 und einer über Feder- und Dämpfungselemente damit verbundenen Sekundär- oder Lastabtriebsmasse 8. Die Primärmasse 7 ist an der die Kurbelwelle simulierenden Welle 9 des Hydrozylinders befestigt. Die Sekundärmasse 8 ist über die Membran 5 und den Prüfkopf 4 mit dem Gehäuse 10 kraftschlüssig verbunden. Eine Verdrehung der Welle 9 gegenüber dem Gehäuse 10 des Torsionszylinders bewirkt damit eine Verspannung der Primär- und Sekundärmasse. Die durch den Antrieb 1 bewirkte Rotation des Hydrozylinders 2 und die Verspannung des Prüflings sind dabei völlig unabhängig voneinander. Dadurch können beliebige Drehzahl-, Verformungs- und Momentenverläufe unabhängig voneinander realisiert werden.

Der rotationssymmetrische Hydrozylinder 2 in Flügelzellenbauweise (maximaler Drehwinkel ca. ± 50°C) ist technisch gelöst, genauso wie die Zuführung der zum Betrieb des Zylinders notwendigen Drucköolversorgung 11 sowie die Zuführung des Meßstromes 12 und der Abgriff der Meßsignale 13 (Moment, Verdrehwinkel) in den bis zu einer Drehzahl von n = 8000/min rotierenden Hydrozylinder.

Da die Primärmasse im Kolbenmotor direkt am Abtriebsflansch der Kurbelwelle befestigt ist, macht sie die durch die Gas- und Massenkräfte hervorgerufenen Taumelbewegungen mit. Um diese Taumelbewegungen in realistischer Weise simulieren zu können, wird an der Sekundärmasse 8 ein Hebel 14 befestigt. Am Ende des Hebels 14 wird über ein Lager 15, z. B. mittels eines Zylinders 16 eine konstante oder gesteuerte variable Kraft eingeleitet. Durch diese Anordnung wird eine mit der Drehzahl des Hydrozylinders 2 umlaufende Taumelbewegung zwischen der Primärmasse 7 und der Sekundärmasse 8 hervorgerufen. Die Größe der Taumelbewegung hängt ab von der durch den Zylinder 16 aufgebrachten Kraft.

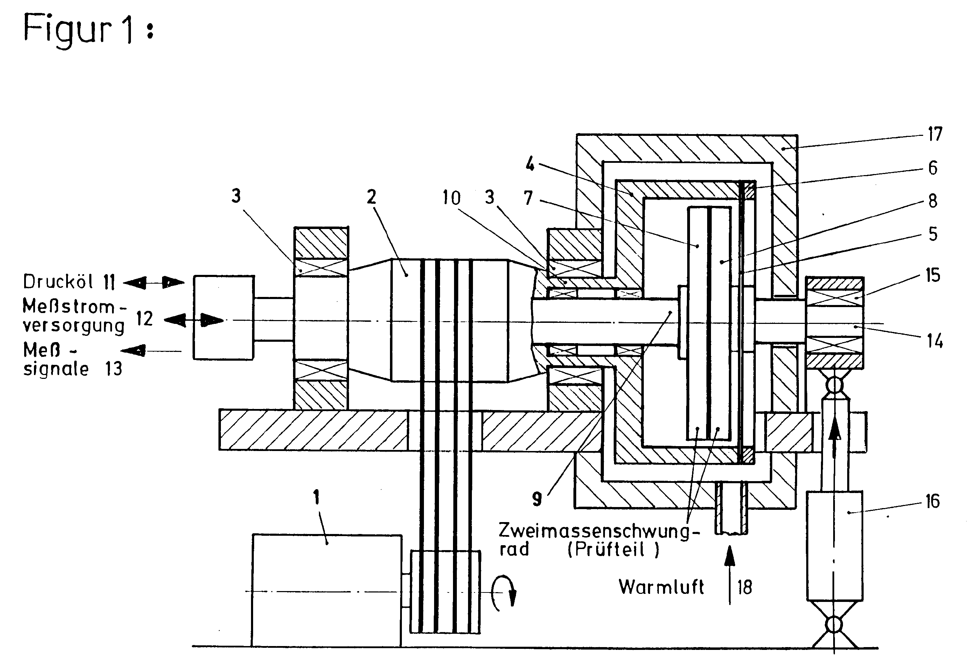

Der Prüfkopf 4 wird mit einer Heizkammer 17 umgeben, um die in Motornähe herrschenden Temperaturen kontrolliert simulieren zu können. Die Aufheizung kann dabei z. B. elektrisch oder, wie in Figur 1, mit Warmluft 18 erfolgen. Die Heizkammer 17 ist geteilt und zur Montage des Prüfteils abnehmbar.

Sämtliche Beanspruchungen können durch Regler und Sollwertgeber (z. B. Rechner) auf alle beliebigen gewünschten Belastungsprofile gesteuert werden. Die Aufnahme von Kennlinien ist in jeder Belastungskombination möglich.

**Patentansprüche**

1. Prüfmaschine für eine dynamische Lebensdaueruntersuchung, Funktionsprüfung und Kennlinienermittlung von Torsionsschwingungsdämpfern und ähnlichen, ein Primärteil (7) und ein Sekundärteil (8) aufweisenden Prüflingen,
mit einem Drehantrieb (1) zum Drehen des Prüflings (7, 8), mit einem rotationssymmetrischen Hydrozylinder (2), der mit einem ersten Abtriebsteil (9) bzw. einem zweiten Abtriebsteil (10) mit dem Primärteil (7) bzw. dem Sekundärteil (8) zum tordierenden Spannen des Prüflings verbindbar ist,
mit einem Drehverbindungselement, beispielsweise einem Treibriemen, zum drehfesten Verbinden des zweiten Abtriebsteils (10) mit dem Drehantrieb (1),
mit einer Kraftübertragungseinrichtung (4, 5) zum Verbinden des zweiten Abtriebsteils (10) mit dem Sekundärteil (8) des Prüflings, wobei die Kraftübertragungseinrichtung einen topfförmigen Prüfkopf (4) umfaßt, in dessen .Innenraum ein Prüfling (7, 8) aufnehmbar ist,
dadurch **gekennzeichnet**,
daß die Kraftübertragungseinrichtung (4, 5) eine torsionssteife, biegeelastische Membran (5) umfaßt, die mit einem Außenrand an einem freien Ende des Prüfkopfs (4) festgespannt ist und die mit einem zentralen Abschnitt mit dem Sekundärteil (8) des Prüflings verbindbar, ist,
und daß der Hydrozylinder (2) beidseitig drehbar gelagert ist und an seinem Gehäuse (10) vom Drehantrieb (1) antreibbar ist.

2. Prüfmaschine nach Anspruch 1,

EP 0 356 445 B1

dadurch **gekennzeichnet,**
daß das erste Abtriebsteil (9) des Hydrozylinders (2) in den Innenraum des Prüfkopfs (4) derart ragt, daß ein Prüfling (7, 8) mit einem Primärteil (7) an das erste Abtriebsteil (9) ankoppelbar ist.

3. Prüfmaschine nach einem der vorhergehenden Ansprüche,
**gekennzeichnet** durch
eine, einen Hebel (14) umfassende Biegeeinrichtung (14, 15, 16), die an das Sekundärteil (8) des Prüflings koppelbar und derart ausgebildet ist, daß eine zur Drehachse des Prüflings (7, 8) senkrecht wirkende Kraft aufbringbar ist.

4. Prüfmaschine nach Anspruch 3,
**dadurch gekennzeichnet,**
daß die Biegeeinrichtung einen am Sekundärteil (8) des Prüflings befestigbaren Hebel (1.4) umfaßt, der über ein Lager (15) mit einem (Hydraulik-) Zylinder (16) verbunden ist, der zur Aufbringung der Kraft ansteuerbar ist.

5. Prüfmaschine nach einem der vorhergehenden Ansprüche,
**gekennzeichnet durch**
eine die Kraftübertragungseinrichtung und damit den Prüfling (7, 8) umschließende Heizkammer (17), deren Innen raum aufheizbar ist.


**Claims**


1. A testing machine for examining service life, monitoring functions, and determining the characteristics of torsional vibration dampers and similar testpieces having a primary part (7) and a secondary part (8), said machine comprising a rotary drive (1) for rotating the testpiece (7, 8), a rotationally symmetrical hydrocylinder (2), which is connectable via a first output element (9) or a second output element (10) with the primary part (7) or secondary part (8) for the twisting clamping of the testpiece, a rotary connection element, for example a drive belt, for the rotationally rigid connection of the second output element (10) with the rotary drive (1), a force transmission device (4, 5) for connecting the second output element (10) with the secondary part (8) of the testpiece, the force transmission device comprising a cup-shaped testing head (4), in whose inner chamber a testpiece (7, 8) can be accommodated, **characterised** in that the force transmission device (4, 5) comprises a torsionally rigid, elastic diaphragm (5), which is clamped with an outer edge to a free end of the testing head (4) and which is connectable in a central section with the secondary part (8) of the testpiece, and the hydrocylinder (2) is rotatably mounted on both sides and its housing (10) can be driven by the rotary drive (1).

2. A testing machine according to claim 1, **characterised** in that the first output element (9) of the hydrocylinder (2) projects into the inner chamber of the testing head (4) in such a manner that a testpiece (7, 8) can be coupled via a primary part (7) to the first output element (9).

3. A testing machine according to one of the preceding claims, **characterised** by a bending device (14, 15, 16), which comprises a lever (14), can be coupled to the secondary part (8) of the testpiece and is designed in such a manner that a force acting perpendicular to the rotational axis of the testpiece (7, 8) can be applied.

4. A testing machine according to claim 3, **characterised in that** the bending device comprises a lever (14), which can be secured to the secondary part (8) of the testpiece and is connected via a bearing (15) with a (hydraulic) cylinder (16), which can be controlled to apply the force.

5. A testing machine according to one of the preceding claims, **characterised by** a heating chamber (17), which encloses the force transmission device and therefore the testpiece (7, 8) and whose inner chamber can be heated.

**Revendications**

1. Machine d'essai pour une étude dynamique de la durée de vie, l'essai de fonctionnement et la détermination des courbes caractéristiques d'amortisseurs d'oscillations de torsion et éprouvettes analogues, présentant une partie primaire (7) et une partie secondaire (8),
avec une commande (1) pour la rotation de l'éprouvette (7,8), avec un cylindre hydraulique (2) à symétrie de révolution, qui peut être assemblé, par une première pièce de sortie (9) et/ou une seconde pièce de sortie (10), à la partie primaire (7) et/ou secondaire (8) pour le serrage avec torsion de l'éprouvette,
avec un élément de jonction de rotation, une courroie motrice par exemple, pour relier la deuxième pièce de sortie (10) à la commande de rotation (1),
avec un dispositif de transmission des forces (4, 5), pour relier la deuxième pièce de sortie (10) à la partie secondaire (8) de l'éprouvette, le dispositif de transmission des forces comportant une tête d'essai (4) en forme de pot, dont le compartiment interne peut recevoir une éprouvette (7, 8),
**caractérisée** en ce que
le dispositif de transmission des forces (4, 5) comporte une membrane (5) élastique, résistante à la torsion, qui est fixée par un bord externe sur une extrémité libre de la tête d'essai (4), et qui peut être reliée par une section centrale à la partie secondaire (8) de l'éprouvette,
et en ce que le cylindre hydraulique (2) est monté avec une possibilité de rotation bilatérale et peut être entraîné, sur son carter (10), par une commande de rotation (1).

2. Machine d'essai suivant la revendication 1,
**caractérisée** en ce que
la première pièce de sortie (9) du cylindre hydraulique (2) pénètre dans le compartiment interne de la tête d'essai (4), de telle sorte qu'une éprouvette (7, 8) peut être accouplée par une partie primaire (7) à la première pièce de sortie (9).

3. Machine d'essai suivant l'une quelconque des revendications précédentes,
**caractérisée** par
un dispositif de flexion (14, 15, 16), comportant un levier (14), qui peut être couplé à la partie secondaire (8) de l'éprouvette et a une réalisation telle, qu'une force, s'exerçant à la perpendiculaire de l'axe de rotation de l'éprouvette (7, 8), peut être appliquée.

4. Machine d'essai suivant la revendication 3,
**caractérisée en ce que**
le dispositif de flexion comporte un levier (14), qui peut être fixé sur la partie secondaire (8) de l'éprouvette et est relié, par l'intermédiaire d'un palier (15), à un cylindre (16) (hydraulique), doté d'une possibilité de commande pour l'application de la force.

5. Machine d'essai suivant l'une quelconque des revendications précédentes,
**caractérisée par**
une chambre de chauffe (17), qui enveloppe le dispositif de transmission des forces, donc l'éprouvette (7, 8), et dont le compartiment interne peut être chauffé.

# Figur 1:

Drucköl 11

Meßstrom-versorgung 12

Meß-signale 13

Zweimassenschwung-rad (Prüfteil)

Warmluft 18

EP 0 356 445 B1